# EUROPÄISCHE PATENTSCHRIFT

(11) **EP 3 804 906 B1**
(45) Veröffentlichungstag und Bekanntmachung des Hinweises auf die Patenterteilung: **15.05.2024**
(21) Anmeldenummer: 19202534.4
(22) Anmeldetag: 10.10.2019
(51) Int. Cl.: B24B 19/04, B24B 53/075, B23B 51/02, B23C 5/10, B23P 15/32, B24B 3/24, B24B 19/02, B23C 3/32

(54) **VERFAHREN ZUR HERSTELLUNG EINER MANTELSEITIGEN SCHNEIDENGEOMETRIE IN EINEM VOLLMATERIALSCHAFTWERKZEUG ZUR MATERIALBEARBEITUNG**
METHOD FOR PRODUCING A SHEATH-SIDE CUTTING GEOMETRY IN A FULL MATERIAL SHAFT TOOL FOR MATERIAL PROCESSING
PROCÉDÉ DE FABRICATION D'UNE GÉOMÉTRIE DE COUPE COTÉ EXTÉRIEUR DANS UN OUTIL À TIGE DE MATÉRIAU PLEIN DESTINÉ AU TRAITEMENT DES MATÉRIAUX

(43) Veröffentlichungstag der Anmeldung: 14.04.2021
(73) Patentinhaber: Fraisa SA, 4512 Bellach (CH)
(72) Erfinder: Maushart, Josef, 4500 Solothurn (CH); Kammermeier, Dirk, 4500 Solothurn (CH); Senn, Stefan, 3296 Arch (CH); Schwaller, Rolf, 2544 Bettlach (CH)
(74) Vertreter: Keller Schneider Patent- und Markenanwälte AG

(56) Entgegenhaltungen:
- EP-A2- 1 322 441
- EP-A2- 1 322 448
- EP-B1- 1 322 441
- EP-B1- 1 322 448

## Beschreibung

### Technisches Gebiet

Die Erfindung betrifft ein Verfahren zur Herstellung einer mantelseitigen Schneidengeometrie in einem Vollmaterialschaftwerl<zeug zur Materialbearbeitung und ein mit einem solchen Verfahren hergestelltes Vollmaterialschaftwerl<zeug.

### Stand der Technik

Vollmaterialschaftwerl<zeuge werden insbesondere zur spanabtragenden Materialbearbeitung eingesetzt, z. B. zum Fräsen oder Bohren. Sie werden aus einem Rohling, insbesondere mit I<reiszylinderförmigem Querschnitt, einstückig hergestellt und umfassen eine stirn- und/oder mantelseitige Schneidengeometrie. Diese kann insbesondere in den Rohling eingeschliffen werden, indem Schleifscheiben mit einem gewissen Durchmesser und einer umfangsseitigen Schleiffläche zum Einsatz gelangen.

Viele Vollmaterialschaftwerl<zeuge umfassen eine mantelseitige Schneidengeometrie mit mindestens einer helikalen oder geraden Nut, der Spannut. An jede Spannut schliesst sich eine Schneidkante an, an diese wiederum in Arbeitsrichtung dahinter eine Freifläche. Weitere Geometrieelemente wie weitere Freiflächen, Absätze, Fasen etc. können vorhanden sein. Mit wachsender Komplexität der Schneidengeometrie wächst auch der Herstellungsaufwand für das Vollmaterialschaftwerl<zeug an: Die Zahl der Schleifvorgänge vergrössert sich und es müssen möglicherweise mehr unterschiedliche Schleifscheiben eingesetzt werden. Entsprechend ergeben sich höhere Prozesszeiten und Herstellungskosten.

Bei der Herstellung eines Vollmaterialschaftwerl<zeugs mit z Schneiden werden beispielsweise folgende Schleifvorgänge durchgeführt:
1) Nuten: in zwei Zyklen (Schruppen / Schlichten), 2z Schleifvorgänge (gegebenenfalls mit zwei unterschiedlichen Werkzeugen)
2) Freistellung: Erzeugen der Freifläche hinter der Schneide, am Rücken, z Schleifvorgänge
3) Schärfen der Schneide: z Schleifvorgänge

Es ergeben sich insgesamt 4z Schleifvorgänge, also z. B. 16 Schleifvorgänge bei einem Werkzeug mit Zähnezahl 4.

Aus dem Stand der Technik sind Ansätze bekannt, um den Herstellungsaufwand bei komplexeren Geometrien zu verringern. So zeigt die CH 628 832 A5 (W. Voegtli) eine Vorrichtung zum Bearbeiten von Schneidwerkzeugen, welche zwei separat eingespannte und angetriebene Schleifscheiben aufweist, die gleichzeitig zur Bearbeitung der Spannut und des Rückens genutzt werden. Entsprechend lassen sich zwei Schleifvorgänge gleichzeitig statt hintereinander ausführen.

Dadurch ergibt sich eine Verkürzung des Herstellungsprozesses. Allerdings bedingt das Verfahren eine aufwendige und präzise Aufspannung der beiden Schleifscheiben.

Im Rahmen der WO 2002/28593 A2 (I<ennametal) wird eine Schleifscheibe eingesetzt, welche einen konturierten Aussenrand aufweist, der ein Schneidlippen-Formgebungssegment, ein Ansatz-Formgebungssegment, ein Nebenfreiflächen-Formgebungssegment und ein Fasenhinterschliff-Formgebungssegment aufweist. Mit Hilfe dieser Schleifscheibe lassen sich sowohl die Nut des Schneidwerkzeugs als auch Freiflächenabschnitte, welche der vorlaufenden Schneide zugeordnet sind (inklusive Fase) gleichzeitig erzeugen. Dadurch kann vermieden werden, dass das Schneidwerkzeug (bzw. der Schneidwerl<zeugrohling) in zwei separate Schleifmaschinen eingespannt werden muss. Entsprechend ergibt sich ein einfacherer Verfahrensablauf, und Fehler aufgrund einer ungenauen Einspannung werden vermieden.

Ähnlicherweise zeigt die EP 1 322 448 A2 (I<ennametal) ein Verfahren sowie eine Schleifscheibe zum Herstellen eines spiralförmigen Schneidwerkzeugs, wobei die Nut sowie die Bereiche des Schneidrücl<ens in einem Schritt hergestellt werden können. Die Schleifscheibe umfasst eine Umfangsfläche mit abrasivem Material zur Bildung einer Schleiffläche. Die Umfangsfläche der Schleifscheibe weist ein Schneidlippensegment auf, welches sich über eine radiale Strecke erstreckt, die die radiale Tiefe der Nut des Schneidwerkzeugs definiert. An das Schneidlippensegment schliessen sich ein Ansatzformgebungssegment, ein Freiflächenformgebungssegment sowie ein Fasenhinterschliffformgebungssegment an.

Die EP 1 322 441 A2 (Kennametal) offenbart ein ähnliches Werkzeug und ein ähnliches Verfahren zur Herstellung eines Schneidwerkzeugs in einem einzigen Verfahrensschritt.

Diese Verfahren ermöglichen eine schnelle Herstellung. Es lassen sich aber nur bestimmte Geometrien herstellen, die die gleichzeitige Herstellung der Nutgeometrie und der Freiflächenabschnitte in einem Zug erlauben. Dies insbesondere deshalb, weil der Materialabtrag im Nutbereich in der Regel deutlich grösser ist als auf dem Rücken und weil die Schleifscheibe, welche im Nutbereich stark radial in das herzustellende Werkzeug eingreift, nur in bestimmten Orientierungen so aufgespannt werden kann, dass ihre Umfangsgeometrie im Rahmen des Schleifvorgangs nicht mit Elementen des Werkzeugs in Konflikt gerät.

### Darstellung der Erfindung

Aufgabe der Erfindung ist es deshalb, ein dem eingangs genannten technischen Gebiet zugehörendes Verfahren zur Herstellung einer mantelseitigen Schneidengeometrie in einem Vollmaterialschaftwerl<zeug zur Materialbearbeitung zu schaffen, welches eine schnelle Herstellung auch komplexerer Geometrien ermöglicht.

Die Lösung der Aufgabe ist durch die Merkmale des Anspruchs 1 definiert. Gemäss der Erfindung umfasst das Verfahren folgende Schritte
a) Einschleifen mindestens einer mantelseitigen Nut in einen Rohling, mit einem ersten Schleifwerkzeug; nachfolgend
b) Bearbeiten des Rohlings mit einem zweiten Schleifwerkzeug umfassend eine Profil-Schleifscheibe.

Die Profil-Schleifscheibe weist dabei auf ihrer Umfangsfläche zwei I<ontal<tflächen auf, die axial einen zurückgenommenen Bereich einschliessen, und die Profil-Schleifscheibe wird für das Bearbeiten derart mit dem Rohling in Kontakt gebracht, dass eine erste der I<ontal<tflächen eine an eine Schneidkante angrenzende Spanfläche erzeugt und dass gleichzeitig eine zweite der I<ontal<tflächen eine an dieselbe Schneidkante angrenzende Freifläche erzeugt.

Die Nut wird somit in einem ersten Schritt erzeugt, mit vergleichsweise grossem Materialabtrag. Im zweiten Schritt erfolgt dann mit der Profil-Schleifscheibe die gleichzeitige Bearbeitung sowohl eines Bereichs der Spannut zur Bildung der Spanfläche als auch des Rückens zur Bildung der Freifläche, mit vergleichsweise geringem Materialabtrag. Im Rahmen dieses zweiten Schritts erfolgt auch das Schärfen der Schneidkante.

Mit der Profil-Schleifscheibe wird also in Bezug auf eine gegebene Schneide des Werl<ezugs sowohl die Spannut, welche zum Abführen der durch diese Schneide erzeugten Späne dient, als auch die Freiflächengeometrie, welche sich an diese Schneide anschliesst, in einem Zug bearbeitet.

Der gemäss Stand der Technik gängige zusätzliche Schlichtvorgang für die Spannut kann entfallen, weil im zweiten Schritt die wesentlichen Bereiche der Spannut im Sinn einer Schlichtbearbeitung nachbearbeitet werden. In diesem zweiten Schritt wird auch eine Art geschliffene Schutzfase im Bereich der Spanfläche erzeugt. Ebenfalls wird in diesem zweiten Schritt die Schneidkante geschärft, so dass die abschliessenden Vorgänge zum Schärfen gemäss Stand der Technik ebenfalls eingespart werden.

Bei der Herstellung eines entsprechenden Vollmaterialschaftwerl<zeugs mit z Schneiden werden also folgende Schleifvorgänge durchgeführt:
1) Nuten: in einem Schritt (die Spanfläche wird erst später erzeugt), z Schleifvorgänge (insbesondere mit einer üblichen Schleifscheibe mit einfacher Geometrie).
2) Spanfläche/Freistellung: Erzeugen sowohl der Spanfläche als auch der Freifläche hinter der Schneide, am Rücken, gleichzeitiges Schärfen, z Schleifvorgänge

Es ergeben sich insgesamt nur 2z Schleifvorgänge, also z. B. 8 Schleifvorgänge bei einem Werkzeug mit Zähnezahl 4. Die Herstellungszeit und damit die Herstellungskosten lassen sich somit erheblich reduzieren, im genannten Beispiel ist bereits die reine Schleifzeit nur ca. halb so lang wie beim herkömmlichen Herstellungsverfahren. Wenn zusätzlich Aufspannungswechsel, Werkzeugwechsel oder Transportvorgänge des Werkstücks eingespart werden können, ergeben sich zusätzliche Verbesserungen.

Weil die Bearbeitungsphase mit grossem Materialabtrag erfindungsgemäss von der Bearbeitungsphase mit vergleichsweise geringem Materialabtrag entkoppelt ist, ergibt sich gegenüber Verfahren, bei welchen die Endgeometrie im Wesentlichen durch einen einzigen Schritt geschaffen werden soll, eine bedeutend grössere Flexibilität, was die erzeugbaren Schneidgeometrien betrifft. So ist das erfindungsgemässe Verfahren zur Herstellung von Vollmaterialschaftwerl<zeugen mit unterschiedlichen Durchmessern, Zähnezahlen oder Längen geeignet. Parameter wie Drallwinkel, I<eilwinl<el, Schutzfasenspanwinl<el, Zahnbreiten und -höhen, Freiwinkel usw. lassen sich in weiteren Bereichen vorgeben. Dies ermöglicht eine bestmögliche Anpassung des herzustellenden Werkzeugs an dessen Aufgabestellung.

Die stirnseitige Schneidgeometrie des Werkzeugs kann grundsätzlich mit für den Stand der Technik bekannten Verfahren erzeugt werden.

Mit dem erfindungsgemässen Verfahren lässt sich insbesondere ein Vollmaterialschaftwerl<zeug zur Materialbearbeitung herstellen, welches einen Werkzeugschaft umfasst mit mindestens einer mantelseitig eingeschliffenen helikalen Spannut mit einer in der Spannut eingeschliffenen Spanfläche, einer an die Spanfläche anschliessenden Schneidkante und einer an die Schneidkante anschliessenden Freifläche, wobei diese Spanfläche und diese Freifläche in demselben Zug geschliffen sind, d. h. insbesondere mit verschiedenen I<ontal<tflächen derselben Profil-Schleifscheibe.

Mit dem erfindungsgemässen Verfahren lässt sich die mantelseitige Schneidengeometrie insbesondere von Zerspanungswerkzeugen im Durchmesserbereich von 2.0 bis 25.0 mm herstellen. Die Zähnezahl der Werkzeuge beträgt insbesondere 2 - 6. Der Drallwinkel des Werkzeugs liegt insbesondere im Bereich von 25°- 70°. Die Spanfläche kann je nach Bedarf konkav oder gerade ausgebildet werden. Sie kann eine Art Schutzfase für die angrenzende Schneide bilden.

Erste Versuche haben gezeigt, dass mit Hilfe des erfindungsgemässen Verfahrens nicht nur die Herstellungszeit reduziert werden kann, sondern dass aufgrund der verfahrensgemäss unterschiedlichen Schneidengeometrie und Ausrichtung der tangentialen Schleifriefen auch eine höhere Leistungsfähigkeit des hergestellten Werkzeugs in Betracht kommt. Aus dem Schleifverfahren resultiert bei geeigneter Formgebung der Profil-Schleifscheibe ein stabiler Schneidkeil mit einer Art Schutzfase in der Spanfläche.

In einer bevorzugten Ausführungsform umfasst das Vollmaterialschaftwerl<zeug einen an die Freifläche anschliessenden Absatz. Dies bedeutet, dass sich hinter der Freifläche (gegebenenfalls hinter mehreren aneinander anschliessenden Freiflächen) ein weiterer Mantelflächenabschnitt anschliesst, der über eine Stufe mit der hintersten Freifläche verbunden ist. Die Stufe weist einen Freiwinkel auf, der grösser ist als der Freiwinkel der hintersten Freifläche und auch grösser als der Freiwinkel des weiteren Mantelflächenabschnitts.

Entsprechend weist die Profil-Schleifscheibe in einer bevorzugten Ausführungsform eine dritte Kontaktfläche auf, die an die zweite Kontaktfläche über einen stufigen Übergang angrenzt, so dass beim Bearbeiten ein Absatz zwischen der Freifläche und einer nachfolgenden Spannut erzeugt wird. Der Absatz kann somit gleichzeitig mit der Spanfläche und der Freifläche erzeugt werden, im Wesentlichen ohne zusätzlichen Zeitaufwand.

Eine derartige Stufe ist insbesondere bei Fräswerkzeugen von Vorteil, die zu einem grossen Materialabtrag führen sollen (Schruppen). Mit der entsprechenden Geometrie lässt sich die Abfuhr der Späne besser bewerkstelligen als ohne Stufe, weil im Rahmen der geforderten Werl<zeugstabilität eine tiefere Spannut geschaffen werden kann.

Bei anderen Ausführungsformen, z. B. Fräswerkzeugen zum Schlichten, wird eine solche Stufe oft nicht benötigt.

Vorzugsweise wird die Profil-Schleifscheibe für das Bearbeiten derart mit dem Rohling in Kontakt gebracht, dass ein erster Kontaktabschnitt der ersten I<ontal<tfläche mit dem Rohling gegenüber einem zweiten Kontaktabschnitt der zweiten I<ontal<tfläche mit dem Rohling axial in Bezug auf den Rohling versetzt sind. Dies lässt sich bei gegebenem Drall durch Wahl eines geeigneten Anstellwinkels in Kombination mit einer geeigneten Geometrie der I<ontal<tflächen und ihrer gegenseitigen Anordnung erreichen. Durch eine versetzte Anordnung lassen sich Geometrien erzeugen, die mit einer axialen Anordnung nicht erzeugbar sind. Es ist in diesem Fall zu beachten, dass der Form des erzeugten Schneidkeils in axialer Richtung nicht der Geometrie der Profil-Schleifscheibe in einer radialen Ebene derselben entspricht. Zudem ergibt sich eine andere Orientierung der Schleifriefen, was zu verbesserten Eigenschaften des hergestellten Werkzeugs, z. B. in Bezug auf die Spanführung, beitragen kann. Schliesslich ergibt sich am proximalen Nutauslauf des Werkzeugs eine andere Geometrie als bei axialer Orientierung, was wiederum zu einer bestmöglichen Ausnutzung der zur Verfügung stehenden Werkzeuglänge genutzt werden kann. Näheres dazu ist weiter unten ausgeführt.

Bevorzugt liegt der erste Kontaktabschnitt in Bearbeitungsrichtung vor dem zweiten Kontaktabschnitt, d. h. bei der weiteren Bearbeitung der im ersten Schritt eingeschliffenen mantelseitigen Nut entlang der Nut, wird zunächst die Spanfläche geschliffen, anschliessend die Freifläche. Das endgültige Schärfen der Schneide erfolgt ebenfalls mit dem Schleifen der Freifläche. Es hat sich gezeigt, dass dadurch vorteilhafte Schneideigenschaften erzeugt werden.

Insbesondere ergeben sich bezogen auf einen radialen Querschnitt des herzustellenden Vollmaterialschaftwerl<zeugs im Rahmen des Bearbeitens des Rohlings mit der Profil-Schleifscheibe pro Schneidkante folgende Teilschritte:
i) Der an die zu schaffende Schneidkante angrenzende Bereich der Spannut wird mit dem ersten Kontaktabschnitt geschliffen, wobei dieser ausgehend vom Schneidkantenbereich in die Spannut eindringt. Während dieses Teilschritts hat die Profil-Schleifscheibe in der betrachteten radialen Ebene keinen Kontakt mit dem der Schneidkante zugeordneten Rücken.
ii) Nach einem (beliebig) kurzen Moment ohne Kontakt zwischen Profil-Schleifscheibe und betrachteter radialer Ebene kontaktiert die Profil-Schleifscheibe den Rücken, ausgehend vom Schneidkantenbereich, mit dem vom ersten Kontaktabschnitt beabstandeten zweiten Kontaktabschnitt. Zunächst werden die Schneidkante geschärft und die Freifläche geschaffen.
iii) Die Profil-Schleifscheibe wird weiter entlang des Rückens geführt, so dass die Bearbeitung der Freifläche abgeschlossen und gegebenenfalls weitere Geometrieelemente, z. B. ein Absatz und ein Übergang in die Spannut (oder weitere Freiflächen), geschaffen werden können.

Obwohl nur eine Profil-Schleifscheibe zum Einsatz kommt, ergeben sich somit im Bereich einer gegebenen Querschnittsebene des Rohlings aufeinanderfolgende Bearbeitungsschritte.

Mit Vorteil wird in einem schaftseitigen Endbereich der mantelseitigen Schneidengeometrie ein Auslauf erzeugt, wobei die an die Schneidkante angrenzende, im zweiten Bearbeitungsschritt mit der Profil-Schleifscheibe erzeugte Spanfläche (und analog die Schärfung der Schneidkante) weiter in Richtung eines Endes der Schneidengeometrie verläuft als die erzeugte Freifläche. Diese Anordnung ergibt sich insbesondere durch das vorbeschriebene versetzte Schleifen. Sie ermöglicht eine gute Ausnutzung der zur Verfügung stehenden Länge des Werkzeugrohlings: Es kann so vermieden werden, dass der Nutauslauf bei gegebener Schneidenlänge in den Werl<zeugspannbereich hinein ragt.

Die zusätzliche Länge entlang des Werl<zeugumfangs (also in einer senkrecht zur Längsachse orientierten Ebene) beträgt beispielsweise mindestens d1/10, insbesondere mindestens d1/5, wobei d 1 den Werkzeugdurchmesser bezeichnet.

Zur Erzeugung des Auslaufs wird die Profil-Schleifscheibe und/oder das erste Schleifwerkzeug insbesondere im schaftseitigen Endbereich radial aus der mantelseitigen Nut herausgefahren, wobei gleichzeitig der Anstellwinkel der Profil-Schleifscheibe und/oder des ersten Schleifwerkzeugs geändert wird, so dass eine axiale Breite der mantelseitigen Nut im Endbereich in Richtung des Endes der Schneidengeometrie kleiner wird. Es bildet sich ein konvexer Abschnitt (ein "Buckel") am Übergang zum unbearbeiteten Mantel.

Bevorzugt umfasst die Profil-Schleifscheibe im Bereich der I<ontal<tflächen Diamantpartikel in Metallbindung. Dies ermöglicht das Abrichten der Profil-Schleifscheibe mittels EDM (electric discharge machining, Funkenerosion), insbesondere durch Drahterodieren. Dadurch lässt sich eine sehr präzise Formgebung erreichen, insbesondere der Abstand zwischen den beiden I<ontal<tflächen lässt sich sehr genau erzeugen. Mit dieser Technologie sind Genauigkeiten von ca. 2/1000 mm erreichbar.

Zudem lassen sich bei metallgebundenen Profil-Schleifscheiben die Schnittgeschwindig-I<eiten und Vorschubwerte beim Schleifen gegenüber den heute üblicherweise verwendeten kunstharzgebundenen Scheiben erhöhen, was wiederum den Herstellungsprozess beschleunigt. Für den ersten Bearbeitungsschritt werden deshalb bevorzugt ebenfalls metallgebundene Schleifscheiben verwendet.

Bevorzugt beträgt ein I<eilwinl<el zwischen Spanfläche und Freifläche 110° bis 60°. Es hat sich gezeigt, dass Werkzeuge mit einer solchen Geometrie gut mit dem erfindungsgemässen Verfahren erzeugbar sind und dass sie hinsichtlich Lebensdauer und Bearbeitungsergebnis vorteilhafte Eigenschaften aufweisen.

In einer bevorzugten Ausführungsform sind das erste Schleifwerkzeug und das zweite Schleifwerkzeug derart ausgebildet, dass eine erste Oberflächenrauheit der Spanfläche von einer zweiten Oberflächenrauheit eines an die Spanfläche anschliessenden Bereichs der mantelseitigen Nut unterschiedlich ist. Insbesondere beträgt der Mittenrauwert der Spanfläche bestimmt nach DIN EN ISO 4287:2010 maximal die Hälfte, insbesondere maximal ein Viertel, des Mittenrauwerts des anschliessenden Bereichs der mantelseitigen Nut (insbesondere eines Bereichs, welcher nur vom ersten Schleifwerkzeug und nicht von der Profil-Schleifscheibe bearbeitet wurde)

Dadurch lassen sich vorteilhafte Eigenschaften des hergestellten Werkzeugs erreichen. Solche unterschiedlichen Rauheiten lassen sich insbesondere erzeugen, indem für die im Schleifprozess mit dem Werkstück zusammenwirkenden Oberflächen des ersten Schleifwerkzeugs einerseits und der Profil-Schleifscheibe andererseits unterschiedlich gewählt werden. Es ist auch möglich, bei der Profil-Schleifscheibe umlaufende Bereiche (Kontaktabschnitte) mit unterschiedlicher Oberflächenbeschaffenheit einzusetzen.

Mit Vorteil wird zum Bearbeiten das zweite Schleifwerkzeug einem Drall der eingeschliffenen mantelseitigen Nut entlang geführt. Dies bringt in Bezug auf die Geometrie der Bearbeitungsflächen der Profil-Schleifscheibe und damit auf die herzustellende Schneidengeometrie die höchstmögliche Flexibilität.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Seitenansicht eines mit dem erfindungsgemässen Verfahren hergestellten Vollmaterial-Schaftfräswerl<zeugs;
- Fig. 2: eine Seitenansicht einer Profilschleifscheibe für das erfindungsgemässe Verfahren gemäss einer ersten Ausführungsform;
- Fig. 3: eine Seitenansicht einer Profilschleifscheibe für das erfindungsgemässe Verfahren gemäss einer zweiten Ausführungsform;
- Fig. 4: eine Seitenansicht des Zusammenwirkens mit der Profilschleifscheibe gemäss der ersten Ausführungsform mit einem Rohling;
- Fig. 5: eine Seitenansicht des Zusammenwirkens mit der Profilschleifscheibe gemäss der zweiten Ausführungsform mit einem Rohling;
- Fig. 6A-H: eine Darstellung der Abfolge der Bearbeitungsschritte zur Herstellung des Vollmaterial-Schaftfräswerl<zeugs anhand eines Ausschnitts des Werl<stücl<querschnitts;
- Fig. 7A, 7B: eine vergleichende Darstellung des Vollmaterial-Schaftfräswerl<zeugs ohne und mit auslaufender Spannut im Übergangsbereich zum Werkzeugschaft anhand von Seitenansichten; und
- Fig. 8A-D: Querschnitte des erfindungsgemässen Vollmaterial-Schaftfräswerl<zeugs im Übergangsbereich zum Werkzeugschaft.

Grundsätzlich sind in den Figuren gleiche Teile mit gleichen Bezugszeichen versehen.

### Wege zur Ausführung der Erfindung

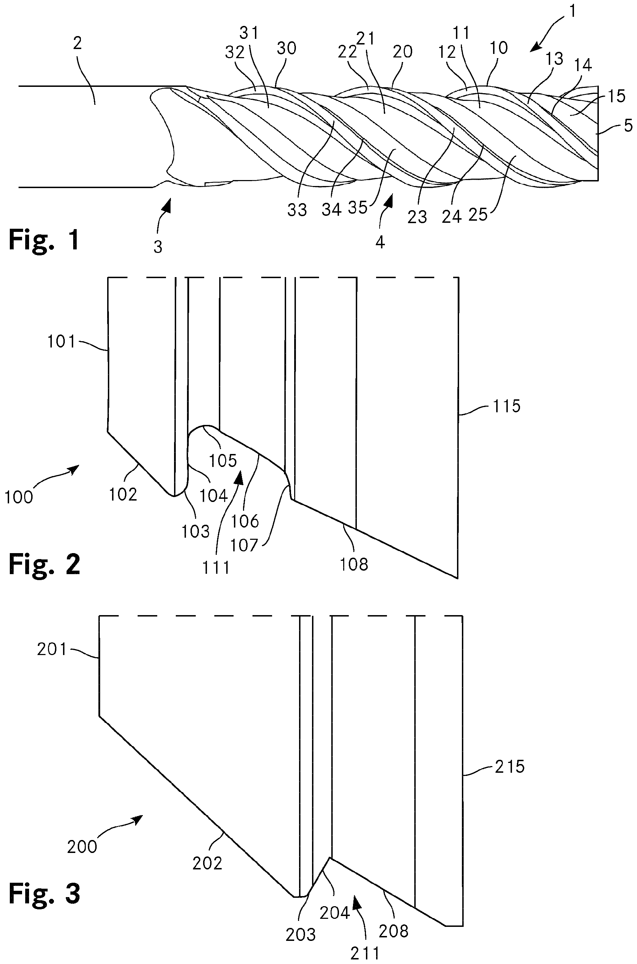

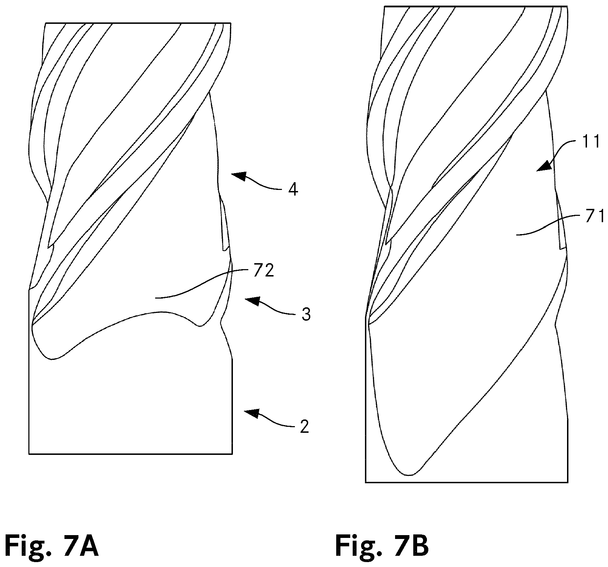

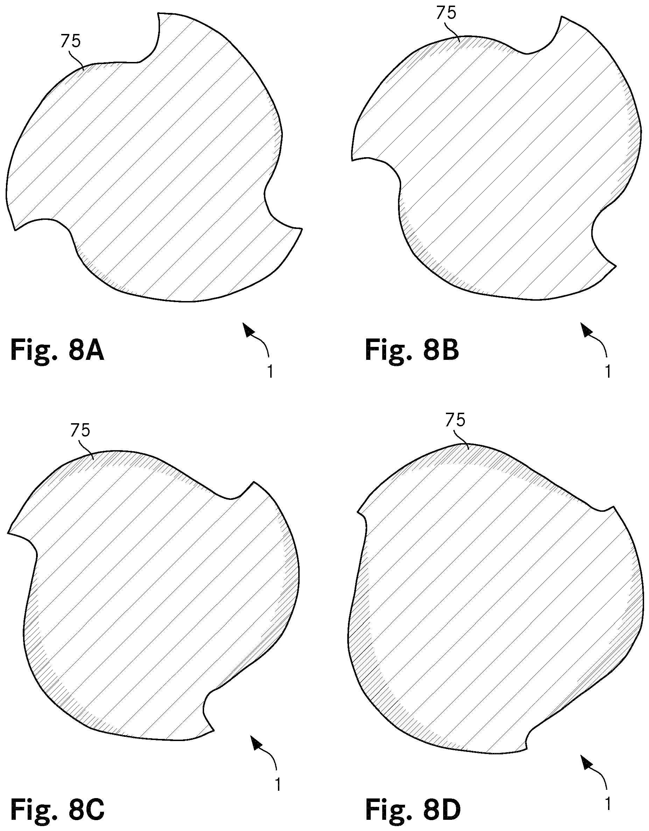

Die Figur 1 zeigt eine Seitenansicht eines mit dem erfindungsgemässen Verfahren hergestellten Vollmaterial-Schaftfräswerl<zeugs. Das Ausführungsbeispiel betrifft ein Fräswerkzeug 1 mit einem Werkzeugdurchmesser von 10 mm, einem Spanwinkel von 10° und einem Drallwinkel von 45°. Das Fräswerkzeug 1 weist einen Werkzeugschaft 2 auf, über welchen es in eine Werkzeugaufnahme einer Bearbeitungsmaschine eingespannt werden kann. Distal an den Schaft 2 schliesst sich über einen Übergangsbereich 3 ein Arbeitsbereich 4 an, dieser Übergangsbereich wird weiter unten, im Zusammenhang mit den Figuren 7 und 8 näher beschrieben. Am freien Ende ist eine Stirn 5 ausgebildet. Letztere kann eine eigene Schneidengeometrie in an sich bekannter Art aufweisen. Diese wird vorliegend nicht näher diskutiert.

Im Arbeitsbereich 4 sind drei helikale Schneiden ausgebildet. Diese weisen jeweils eine helikale Schneidkante 10, 20, 30 auf. Vor jeder Schneidkante 10, 20, 30 ist eine zugehörige Spannut 11, 21, 31 angeordnet. Hinten an die Schneidkante schliesst eine Freifläche 13, 23, 33 an, die über einen Absatz 14, 24, 34 in einen hinteren Rückenbereich 15, 25, 35 übergeht. Dieser schafft einen Übergang zur vorangehenden Spannut 31, 11, 21. In jeder der Spannuten 11, 21, 31 ist angrenzend an die Schneidkante 10, 20, 30 eine Spanfläche 12, 22, 32 ausgebildet, welche eine Stützfase für die jeweilige Schneidkante 10, 20, 30 bildet.

Die Figur 2 zeigt eine Seitenansicht einer Profilschleifscheibe für das erfindungsgemässe Verfahren gemäss einer ersten Ausführungsform. Dargestellt ist der äussere Umfangsbereich. Dieser umfasst ausgehend von einer ersten Stirnseite 101 der Profilschleifscheibe 100 einen ersten Abschnitt 102 mit sich linear vergrösserndem Durchmesser (Steigungswinkel 45°), an diesen schliesst sich ein konvex gerundeter Abschnitt 103 an, der in einen radialen Abschnitt 104 und anschliessend in einen konkaven Abschnitt 105 übergeht, so dass eine tiefe Mulde 111 gebildet wird. Auf den konkaven Abschnitt 105 folgt wiederum ein Abschnitt 106 mit sich linear vergrösserndem Durchmesser (Steigungswinkel 30°). Über einen S-förmigen Abschnitt 107, in welchem sich der Durchmesser wieder fast radial vergrössert, folgt schliesslich ein ausgedehnter Abschnitt 108 mit einer wiederum linearen Vergrösserung des Durchmessers (Steigungswinkel 25°), der sich bis zur zweiten Stirnseite 115 der Profilschleifscheibe 100 erstreckt.

Diese Profilschleifscheibe 100 gemäss der ersten Ausführungsform zeichnet sich somit dadurch aus, dass der axial zurückgenommene Bereich durch die markante Mulde 111 gebildet wird, welche beidseitig von radialen bzw. praktisch radialen Abschnitten begrenzt wird.

Die Figur 3 zeigt eine Seitenansicht einer Profilschleifscheibe für das erfindungsgemässe Verfahren gemäss einer zweiten Ausführungsform. Dargestellt ist der äussere Umfangsbereich. Dieser umfasst ausgehend von einer ersten Stirnseite 201 der Profilschleifscheibe 200 einen ersten Abschnitt 202 mit sich linear vergrösserndem Durchmesser (Steigungswinkel 43°), an diesen schliesst sich ein konvex gerundeter Abschnitt 203 an, der in einen Abschnitt 204 mit sich linear verringerndem Durchmesser (Steigungswinkel 60°) und anschliessend in einen Abschnitt 208 mit einer wiederum linearen Vergrösserung des Durchmessers (Steigungswinkel 30°). Über eine Fase 209 geht dieser in die zweite Stirnseite 215 der Profilschleifscheibe 200 über.

Im Gegensatz zur Profilschleifscheibe 100 gemäss der ersten Ausführungsform fehlt es somit an der Mulde 111, es ist als axial zurückgenommener Bereich lediglich ein im Wesentlichen v-förmiger Einschnitt 211 vorhanden.

Bei den Profilschleifscheiben 100, 200 handelt es sich um metallgebundene Diamant-Schleifscheiben mit Sinter-Metallbindung. Sie wurden mittels Drahterodieren abgerichtet, profiliert und geschärft. Maximale Abweichungen von der geforderten Geometrie liegen bei unter 0.002 mm.

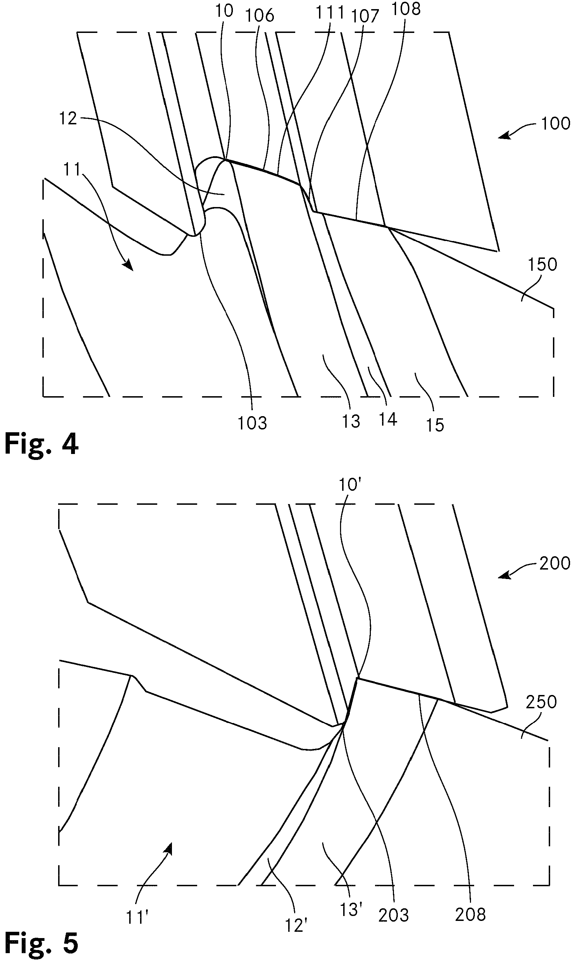

Die Figur 4 zeigt eine Seitenansicht des Zusammenwirkens mit der Profilschleifscheibe 100 gemäss der ersten Ausführungsform mit einem Rohling 150. Die auf der Abbildung sichtbare Seite wurde bereits mit der Profilschleifscheibe 100 bearbeitet und weist im Wesentlichen die Aussengeometrie des fertigen Fräswerkzeugs auf. Die Profilschleifscheibe wirkt zum einen mit dem konvex gerundeten Abschnitt 103 auf den an die Schneidkante 10 angrenzenden Bereich der Spannut 11 ein zur Bildung der Spanfläche 12. Zum anderen wirkt sie mit dem Teil der Mulde 111 bildenden Abschnitt 106 mit linear vergrösserndem Durchmesser, dem S-förmigen Abschnitt 107 und einem inneren Bereich des ausgedehnten Abschnitts 108 auf die an die Schneidkante 10 anschliessende Freifläche 13, den Absatz 14 und den hinteren Rückenbereich 15 ein.

Aufgrund des gewählten Anstellwinkels der Profilschleifscheibe 100 geht dabei die Bearbeitung der Spanfläche 12 der Bearbeitung des Rückens voran. Die Schneidkante 10 wird zunächst spanflächenseitig durch den konvex gerundeten Bereich 103 und anschliessend durch den Teil der Mulde 111 bildenden linearen Abschnitt 106 bearbeitet und so geschärft.

Die Figur 5 zeigt eine Seitenansicht des Zusammenwirkens mit der Profilschleifscheibe 200 gemäss der zweiten Ausführungsform mit einem Rohling 250. Die auf der Abbildung sichtbare Seite wurde bereits mit der Profilschleifscheibe 200 bearbeitet und weist im Wesentlichen die Aussengeometrie des fertigen Fräswerkzeugs auf. Die Profilschleifscheibe wirkt zum einen mit dem konvex gerundeten Abschnitt 203 auf den an die Schneidkante 10' angrenzenden Bereich der Spannut 11' ein zur Bildung der Spanfläche 12'. Zum anderen wirkt sie mit dem inneren Bereich des ausgedehnten Abschnitts 108 auf die an die Schneidkante anschliessende Freifläche 13' ein.

Aufgrund des gewählten Anstellwinkels der Profilschleifscheibe 200 geht dabei die Bearbeitung der Spanfläche 12' der Bearbeitung der Freifläche 13' voran. Die Schneidkante 10' wird zunächst spanflächenseitig durch den konvex gerundeten Abschnitt 203 und anschliessend durch den ausgedehnten Abschnitt 208 bearbeitet und so geschärft.

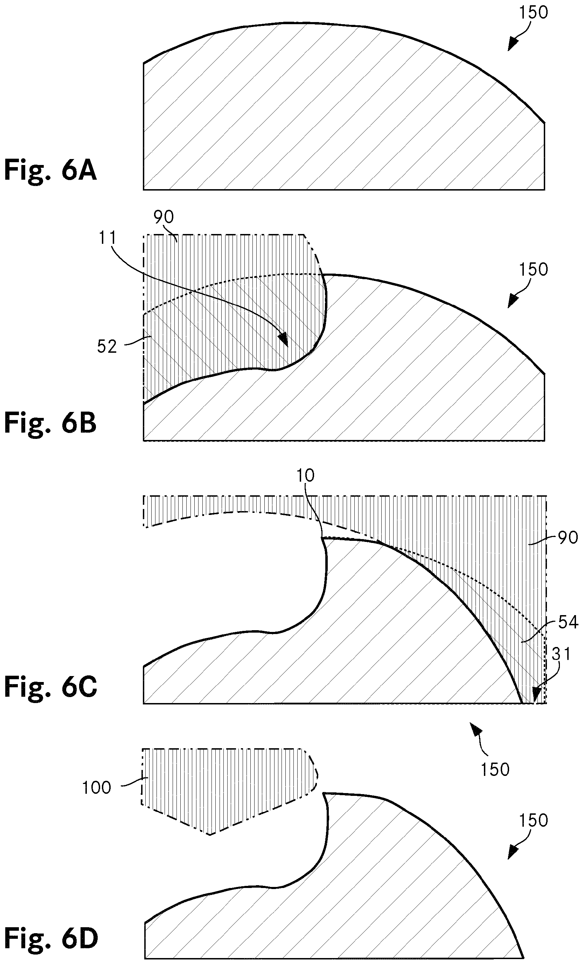

Die Figuren 6A-H stellen die Abfolge der Bearbeitungsschritte zur Herstellung des Vollmaterial-Schaftfräswerkzeugs dar. Gezeigt sind jeweils ein Abschnitt eines radialen Querschnitts durch den Rohling 150 für das in Herstellung befindliche Vollmaterial-Schaftfräswerkzeug und der entsprechende Querschnitt durch das bearbeitende Werkzeug, nämlich die übliche Schleifscheibe 90 bzw. die bearbeitende Profil-Schleifscheibe 100. Es ist zu beachten, dass der Anstellwinkel schräg zur dargestellten Ebene verläuft, so dass der Querschnitt durch die Profil-Schleifscheibe 100 nicht direkt die

Geometrie in den Figuren 2 bzw. 4 widerspiegelt. Der Querschnitt durch den Rohling 150 ist jeweils schräg ansteigend schraffiert, derjenige durch die Profil-Schleifscheibe 100 ist vertikal eng schraffiert. Schliesslich ist in den Figuren auch der Materialabtrag verglichen mit der vorangegangenen Figur dargestellt und zwar durch eine absteigende schräge Schraffur.

Ausgegangen wird von einem kreiszylindrischen Rohling 150 (Figur 6A). In diesen werden zunächst mit einer üblichen Schleifscheibe 90 die Spannuten eingeschliffen. In der Figur 6B ist die resultierende Geometrie des Rohlings 150 nach der Erzeugung der ersten Spannut 11 dargestellt sowie der erfolgte Materialabtrag 52.

In der Figur 6C ist die resultierende Geometrie des Rohlings 150 nach der Erzeugung der nachfolgenden Spannut 31 mit der Schleifscheibe 90 dargestellt sowie der Materialabtrag 54. Wie aus der Figur ersichtlich ist, führt die Erzeugung der nachfolgenden Spannut zu einer Bearbeitung des Rückens der zu bildenden Schneidkante 10, der unmittelbar an die Schneidkante 10 anschliessende Abschnitt wird aber im Rahmen des ersten Bearbeitungsschritts mit der üblichen Schleifscheibe nicht bearbeitet.

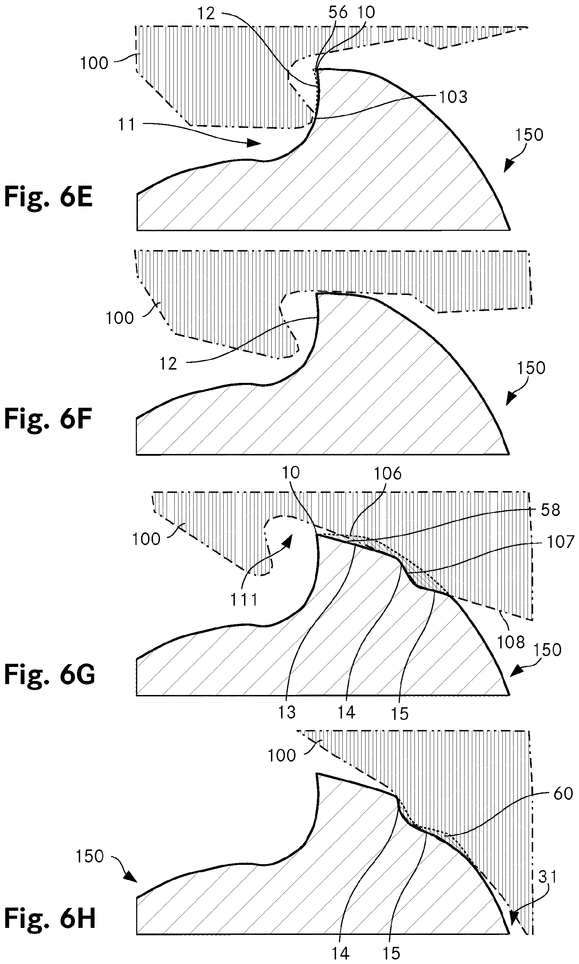

Die Figur 6D zeigt die Situation unmittelbar vor der Kontaktierung des Rohlings 150 mit der Profilschleifscheibe 100. Die Figur 6E zeigt die Situation während der Bearbeitung der Spannut 11 zur Bildung der Spanfläche 12. Die Profilschleifscheibe 100 kontaktiert den entsprechenden Bereich des Rohlings 150 mit dem konvex gerundeten Abschnitt 103. Der Materialabtrag 56 erstreckt sich ausgehend von der Schneidkante 10 in die Spannut 11.

Die Figur 6F zeigt die Situation nach erfolgtem Schleifen der Spanfläche 12 und vor dem Schleifen des Zahnrückens, welche wie bereits erwähnt aufgrund des Anstellwinkels der Profilschleifscheibe 100 in einem gegebenen Querschnitt des Werkstücks 150 zeitlich nach hinten versetzt erfolgt. Die Profilschleifscheibe 100 kontaktiert im dargestellten Moment und in Bezug auf die dargestellte Querschnittsebene weder die Spannut 11 noch den Rücken.

Die Figur 6G zeigt das Schleifen des Rückens. Die Profilschleifscheibe 100 kontaktiert das Werkstück 150 im Bereich der zu bildenden Freifläche 13 mit dem in der Mulde 111 befindlichen geraden Abschnitt 106, den zu bildenden Absatz 14 mit dem S-förmigen Abschnitt 107 und den zu bildenden hinteren Rückenbereich 15 mit dem ausgedehnten geraden Abschnitt 108. Der Materialabtrag 58 umfasst entsprechend Bereiche von der zu bildenden Schneidkante 10 über die Freifläche 13 und den Absatz 14 bis in den hinteren Rückenbereich 15.

Das Ergebnis der weiteren Schleifbearbeitung durch die Profilschleifscheibe 100, kurz vor dem Ablösen der Profilschleifscheibe 100 im dargestellten Querschnitt, ist in der Figur 6H dargestellt. Die Profilschleifscheibe 100 kontaktiert das Werkstück 150 noch im Bereich des Absatzes 14 und des hinteren Rückenbereichs 15. Im Anschluss an den Absatz 14 hat sich die durch die Bearbeitung mit der Profilschleifscheibe 100 durch den Materialabtrag 60 ein allmählicher Übergang in die nachfolgende Spannut 31 ergeben, namentlich in den nicht von der Profilschleifscheibe bearbeiteten Bereich derselben.

Die weiteren Schneidkanten werden anschliessend ebenfalls mit der Profil-Schleifscheibe 100 nachbearbeitet. Auf die im Ausschnitt der Figur 6H dargestellte Geometrie haben diese nachfolgenden Bearbeitungsvorgänge keinen Einfluss.

Die im Zusammenhang mit den Figuren 6A-6H dargestellten Schritte werden analog im gesamten Arbeitsbereich des Werkzeugs durchgeführt, wobei die Schleifscheiben dem Drall der Schneiden entlang geführt werden und wobei jede der Schneiden von der Werkzeugstirn bis zum schaftseitigen Ende in jeweils einem Zug durch die übliche Schleifscheibe und die Profil-Schleifscheibe erzeugt bzw. bearbeitet wird.

Die Figuren 7A und 7B zeigen einen Ausschnitt der Seitenansicht eines Vollmaterial-Schaftfräswerl<zeugs. Dargestellt ist der Übergangsbereich 3 zwischen dem Arbeitsbereich 4 und dem Werkzeugschaft 2. Die Figur 7A zeigt die vorbeschriebene Ausführungsform, in der Figur 7B ist zum Vergleich eine Variante ohne auslaufende Spannut dargestellt.

Am Ende der Spannut werden sowohl bei deren Erzeugung im ersten Schritt mit der herkömmlichen Schleifscheibe als auch bei der Nachbearbeitung mittels der Profilschleifscheibe nebst der Zustellung auch der Anstellwinkel der Schleifscheibe in Bezug auf den Rohling geändert. Anstelle des in der Figur 7B sichtbaren Nutauslaufs 71 mit i. W. gleichbleibender Breite resultiert ein Nutauslauf 72 mit sich verringernder Breite (vgl. Figur 7A). Aufgrund der Schleifgeometrie bilden sich zudem eine Nutwölbung und eine buckelartige axiale Auswölbung im unbearbeiteten Schaftbereich. Durch die bevorzugte Geometrie gemäss Figur 7A ergibt sich bei vorgegebener Länge des Arbeitsbereichs und des Werkzeugschafts eine geringere Werl<zeuggesamtlänge. Dies trägt insbesondere zu einer verbesserten mechanischen Stabilität des Werkzeugs und zu einer Reduktion der auftretenden Vibrationen bei. Im dargestellten Beispiel beträgt die Reduktion der Werl<zeuggesamtlänge ca. 0.75 d1.

Versuche haben gezeigt, dass die unterschiedliche Geometrie am Auslauf der Spannut 11 nicht zu einer relevanten Beeinflussung des Spanabfuhrverhaltens des Werkzeugs führt.

Ebenfalls gut in der Figur 7A erkennbar ist die verglichen mit der Spanfläche kürzere Bearbeitung des Zahnrückens, im Bereich der Freifläche 13 (bzw. rücl<enseitige Schärfung der Schneidkante). Diese resultiert aus dem vorbeschriebenen Vorlauf der Bearbeitung der Spanfläche in Bezug auf die Bearbeitung des Rückens.

Die Figuren 8A-D zeigen Querschnitte des erfindungsgemässen Vollmaterial-Schaftfräswerl<zeugs 1 im Übergangsbereich zum Werkzeugschaft. Dargestellt ist jeweils der radiale Querschnitt, senkrecht zur Längsachse des Werkzeugs, wobei die zusätzlichen Anteile 75 in diesem Bereich des Werkzeugs, verglichen mit einem üblichen Nutauslauf, aufgrund der spezifischen Anpassung des Anstellwinkels und der Zustellung, eng schraffiert dargestellt sind. Die Figur 8A zeigt die Situation zu Beginn des Übergangsbereichs, die Figur 8B stellt die Situation 2 mm näher am Werkzeugschaft dar, die Figur 8C nochmals 2 mm näher, und die Figur 8D nochmals 1 mm näher. Nebst einer Verkürzung des Nutauslaufs resultiert aufgrund der höheren Materialstärke auch spezifisch in diesem Bereich eine höhere Werl<zeugstabilität.

Der Umfang der Erfindung wird durch die Ansprüche definiert und ist nicht auf die dargestellten Ausführungsbeispiele beschränkt. Die Schneidengeometrie des Vollmaterial-Schaftfräswerl<zeugs (oder eines anderen zerspanenden Werkzeugs) kann anders ausgebildet sein, z. B. was den Durchmesser, die Zähnezahl, die Zahnbreiten und -höhen, den Spanwinkel, die Nutgeometrie oder die Anordnung und Geometrie der Freiflächen betrifft. Entsprechend ergibt sich auch eine andere Geometrie der Bearbeitungswerkzeuge, insbesondere der Profil-Schleifscheibe.

Grundsätzlich können sich an die beiden Schleifvorgänge weitere Bearbeitungsschritte anschliessen, z. B. weitere Schleifvorgänge, eine Beschichtung oder chemische Nachbearbeitung der Oberfläche.

Zusammenfassend ist festzustellen, dass die Erfindung ein Verfahren zur Herstellung einer mantelseitigen Schneidengeometrie in einem Vollmaterialschaftwerl<zeug zur Materialbearbeitung bereitstellt, durch welches bei hoher Flexibilität in Bezug auf die Werkzeuggeometrie die Herstellungszeit reduziert wird.

## Patentansprüche

1. Verfahren zur Herstellung einer mantelseitigen Schneidengeometrie in einem Vollmaterialschaftwerl<zeug (1) zur Materialbearbeitung, umfassend folgende Schritte:
a) Einschleifen mindestens einer mantelseitigen Nut (11) in einen Rohling (150), mit einem ersten Schleifwerkzeug; nachfolgend
b) Bearbeiten des Rohlings (150) mit einem zweiten Schleifwerkzeug umfassend eine Profil-Schleifscheibe (100), wobei
die Profil-Schleifscheibe (100) auf ihrer Umfangsfläche zwei I<ontal<tflächen (103, 106) aufweist, die axial einen zurückgenommenen Bereich (111) einschließen und
die Profil-Schleifscheibe (100) für das Bearbeiten derart mit dem Rohling (150) in Kontakt gebracht wird, dass eine erste der I<ontal<tflächen (103) eine an eine Schneidkante (10) angrenzende Spanfläche (12) erzeugt und dass gleichzeitig eine zweite der I<ontal<tflächen (106) eine an dieselbe Schneidkante (10) angrenzende Freifläche (13) erzeugt.

2. Verfahren nach Anspruch 1, **dadurch gekennzeichnet, dass** die Profil-Schleifscheibe (100) eine dritte I<ontal<tfläche (108) aufweist, die an die zweite I<ontal<tfläche (106) über einen stufigen Übergang (107) angrenzt, so dass beim Bearbeiten ein Absatz (14) zwischen der Freifläche (13) und einer nachfolgenden Spannut (31) erzeugt wird.

3. Verfahren nach Anspruch 1 oder 2, **dadurch gekennzeichnet, dass** die Profil-Schleifscheibe (100) für das Bearbeiten derart mit dem Rohling (150) in Kontakt gebracht wird, dass ein erster Kontaktabschnitt der ersten I<ontal<tfläche (103) mit dem Rohling (150) gegenüber einem zweiten Kontaktabschnitt der zweiten I<ontal<tfläche (106) mit dem Rohling (150) axial in Bezug auf den Rohling (150) versetzt sind.

4. Verfahren nach Anspruch 3, **dadurch gekennzeichnet, dass** der erste Kontaktabschnitt in Bearbeitungsrichtung vor dem zweiten Kontaktabschnitt liegt.

5. Verfahren nach einem der Ansprüche 1 bis 4, **dadurch gekennzeichnet, dass** in einem schaftseitigen Endbereich der mantelseitigen Schneidengeometrie ein Auslauf (72) erzeugt wird, wobei die an die Schneidkante angrenzende erzeugte Spanfläche (12, 22, 32) weiter in Richtung eines Endes der Schneidengeometrie verläuft als die erzeugte Freifläche (13, 23, 33).

6. Verfahren nach Anspruch 5, **dadurch gekennzeichnet, dass** die Profil-Schleifscheibe (100) und/oder das erste Schleifwerkzeug zur Erzeugung des Auslaufs (72) im schaftseitigen Endbereich radial aus der mantelseitigen Nut herausgefahren wird, wobei gleichzeitig ein Anstellwinkel der Profil-Schleifscheibe (100) und/oder des ersten Schleifwerkzeugs geändert wird, so dass eine axiale Breite der mantelseitigen Nut im Endbereich in Richtung des Endes der Schneidengeometrie kleiner wird.

7. Verfahren nach einem der Ansprüche 1 bis 6, **dadurch gekennzeichnet, dass** die Profil-Schleifscheibe (100) im Bereich der I<ontal<tflächen Diamantpartikel in Metallbindung umfasst.

8. Verfahren nach einem der Ansprüche 1 bis 7, **dadurch gekennzeichnet, dass** ein I<eilwinl<el zwischen Spanfläche (12, 22, 32) und Freifläche (13, 23, 33) 110° bis 60° beträgt.

9. Verfahren nach einem der Ansprüche 1 bis 8, **dadurch gekennzeichnet, dass** das erste Schleifwerkzeug und das zweite Schleifwerkzeug derart ausgebildet sind, dass eine erste Oberflächenrauheit der Spanfläche (12, 22, 32) von einer zweiten Oberflächenrauheit eines an die Spanfläche (12, 22, 32) anschließenden Bereichs der mantelseitigen Nut unterschiedlich ist.

10. Verfahren nach einem der Ansprüche 1 bis 9, **dadurch gekennzeichnet, dass** zum Bearbeiten das zweite Schleifwerkzeug einem Drall der eingeschliffenen mantelseitigen Nut entlang geführt wird.

11. Vollmaterialschaftwerl<zeug (1) zur Materialbearbeitung, umfassend einen Werkzeugschaft (2) mit mindestens einer mantelseitig eingeschliffenen helikalen Spannut (11,21,31) mit einer in der Spannut (11,21,31) eingeschliffenen Spanfläche (12, 22, 32), einer an die Spanfläche (12, 22, 32) anschließenden Schneidkante (10, 20, 30) und einer an die Schneidkante (10, 20, 30) anschließenden Freifläche (13, 23, 33), **dadurch gekennzeichnet, dass** das Vollmaterialschaftwerl<zeug (1) gemäß einem Verfahren nach einem der Ansprüche 1 bis 10 hergestellt wird, so dass die Spanfläche (12, 22, 32) und die Freifläche (13, 23, 33) in demselben Zug geschliffen sind.

12. Vollmaterialschaftwerl<zeug nach Anspruch 11, **gekennzeichnet durch** einen an die Freifläche (13, 23, 33) anschließenden Absatz (14, 24, 34).

13. Vollmaterialschaftwerl<zeug nach Anspruch 11 oder 12, **gekennzeichnet durch** einen Auslauf (72) in einem schaftseitigen Endbereich der mantelseitigen Spannut (11, 21, 31), wobei die an die Schneidkante (10, 20, 30) angrenzende Spanfläche (12, 22, 32) weiter in Richtung eines Endes der Spannut (11, 21, 31) verläuft als die Freifläche (13, 23, 33).

14. Vollmaterialschaftwerl<zeug nach Anspruch 13, **dadurch gekennzeichnet, dass** eine axiale Breite der Spannut (11, 21, 31) im schaftseitigen Endbereich in Richtung des Endes der Spannut (11, 21, 31) kleiner wird.

15. Vollmaterialschaftwerl<zeug nach einem der Ansprüche 11 bis 14, **dadurch gekennzeichnet, dass** eine erste Oberflächenrauheit der Spanfläche (12, 22, 32) von einer zweiten Oberflächenrauheit eines an die Spanfläche (12, 22, 32) anschließenden Bereichs der Spannut (11,21,31) unterschiedlich ist.

## Claims

1. Method for producing a shell-side cutting edge geometry in a solid shank tool (1) for material processing, comprising the following steps:
a) Grinding at least one shell-side flute (11) into a blank (150) using a first grinding tool; then
b) machining the blank (150) with a second grinding tool comprising a profile grinding disc (100), wherein
the profile grinding disc (100) has two contact surfaces (103, 106) on its circumferential surface, which axially enclose a recessed area (111), and
the profile grinding disc (100) is brought into contact with the blank (150) for machining in such a way that a first of the contact surfaces (103) produces a rake face (12) adjacent to a cutting edge (10) and that at the same time a second of the contact surfaces (106) produces a clearance face (13) adjacent to the same cutting edge (10).

2. Method according to claim 1, **characterised in that** the profile grinding disc (100) has a third contact surface (108) which adjoins the second contact surface (106) via a stepped transition (107), so that during machining a shoulder (14) is produced between the clearance face (13) and a subsequent flute (31).

3. Method according to claim 1 or 2, **characterised in that** the profile grinding disc (100) is brought into contact with the blank (150) for machining in such a way that a first contact section of the first contact surface (103) with the blank (150) is offset axially with respect to the blank (150) relative to a second contact section of the second contact surface (106) with the blank (150).

4. Method according to claim 3, **characterised in that** the first contact section lies in front of the second contact section in the machining direction.

5. Method according to one of claims 1 to 4, **characterised in that** a run-out (72) is produced in a shank-side end region of the shell-side cutting edge geometry, the produced rake face (12, 22, 32) adjacent to the cutting edge extending further in the direction of one end of the cutting edge geometry than the produced clearance face (13, 23, 33).

6. Method according to claim 5, **characterised in that** the profile grinding disc (100) and/or the first grinding tool for producing the run-out (72) in the shank-side end region is moved radially out of the shell-side flute, an angle of attack of the profile grinding disc (100) and/or of the first grinding tool being changed at the same time, so that an axial width of the shell-side flute in the end region becomes smaller in the direction of the end of the cutting edge geometry.

7. Method according to one of claims 1 to 6, **characterised in that** the profile grinding disc (100) comprises diamond particles in metal bond in the region of the contact surfaces.

8. Method according to one of claims 1 to 7, **characterised in that** a wedge angle between the rake face (12, 22, 32) and the clearance face (13, 23, 33) is 110° to 60°.

9. Method according to one of claims 1 to 8, **characterised in that** the first grinding tool and the second grinding tool are designed in such a way that a first surface roughness of the rake face (12, 22, 32) is different from a second surface roughness of a region of the shell-side flute adjoining the rake face (12, 22, 32).

10. Method according to one of claims 1 to 9, **characterised in that**, for machining, the second grinding tool is guided along a twist of the ground shell-side flute .

11. Solid shank tool (1) for material processing, comprising a tool shank (2) with at least one helical flute (11, 21, 31) ground in on the shell side with a rake face (12, 22, 32) ground in the flute (11, 21, 31), a cutting edge (10, 20, 30) adjoining the rake face (12, 22, 32) and a clearance face (13, 23, 33) adjoining the cutting edge (10, 20, 30), **characterised in that** the solid shank tool (1) is produced according to a method according to one of claims 1 to 10, so that the rake face (12, 22, 32) and the clearance face (13, 23, 33) are ground in the same pass.

12. Solid shank tool according to claim 11, **characterised by** a shoulder (14, 24, 34) adjoining the clearance face (13, 23, 33).

13. Solid shank tool according to claim 11 or 12, **characterised by** a run-out(72) in a shank-side end region of the shell-side flute (11, 21, 31), wherein the rake face (12, 22, 32) adjacent to the cutting edge (10, 20, 30) extends further in the direction of one end of the flute (11, 21, 31) than the clearance face (13, 23, 33).

14. Solid shank tool according to claim 13, **characterised in that** an axial width of the flute (11, 21, 31) in the shank-side end region becomes smaller in the direction of the end of the flute (11, 21, 31).

15. Solid shank tool according to one of claims 11 to 14, **characterised in that** a first surface roughness of the rake face (12, 22, 32) is different from a second surface roughness of a region of the flute (11, 21, 31) adjoining the rake face (12, 22, 32).

## Revendications

1. Procédé, destiné à produire une géométrie de taillants du côté enveloppe d'un outil à queue (1) en matériel plein, destiné à l'usinage de matériaux, comprenant les étapes suivantes:
a) roder au moins une rainure (11) du côté enveloppe dans une ébauche (150), à l'aide d'un premier outil abrasif ; ensuite
b) usiner l'ébauche (150) avec un deuxième outil abrasif, comprenant une meule profilée (100),
sur sa surface périphérique, la meule profilée (100) comportant deux surfaces de contact (103, 106) qui englobent en direction axiale une zone en retrait (111) et pour l'usinage, la meule profilée (100) étant amenée en contact avec l'ébauche (150), de telle sorte qu'une première des surfaces de contact (103) créé une surface (12) d'enlèvement de copeaux adjacente à une arête de coupe (10) et que simultanément, une deuxième des surfaces de contact (106) créé une surface libre (13) adjacente à la même arête de coupe (10).

2. Procédé selon la revendication 1, **caractérisé en ce que** la meule profilée (100) comporte une troisième surface de contact (108) qui est adjacente à la deuxième surface de contact (106) par l'intermédiaire d'un passage (107) en gradins, de telle sorte que lors de l'usinage, un talon (14) se créé entre la surface libre (13) et une rainure de coupe (31) consécutive.

3. Procédé selon la revendication 1 ou 2, **caractérisé en ce que** pour l'usinage, la meule profilée (100) est amenée en contact avec l'ébauche (150), de telle sorte qu'un premier segment de contact de la première surface de contact (103) avec l'ébauche (150) soit décalé par rapport à un deuxième segment de contact de la deuxième surface de contact (106) avec l'ébauche (150) en direction axiale, en rapport à l'ébauche (150).

4. Procédé selon la revendication 3, **caractérisé en ce que** le premier segment de contact se situe à l'avant du deuxième segment de contact dans la direction d'usinage.

5. Procédé selon l'une quelconque des revendications 1 à 4, **caractérisé en ce que** dans une zone d'extrémité du côté queue de la géométrie de taillants du côté enveloppe, l'on créé une sortie (72), la surface (12, 22, 32) d'enlèvement de copeaux adjacente à l'arête de coupe qui a été créée s'écoulant plus loin en direction d'une extrémité de la géométrie de taillants que la surface libre (13, 23, 33) créée.

6. Procédé selon la revendication 5, **caractérisé en ce que**, pour créer la sortie (72) dans la zone d'extrémité du côté queue, l'on fait sortir la meule profilée (100) et / ou le premier outil abrasif en direction radiale hors de la rainure du coté enveloppe, en modifiant simultanément un angle d'attaque de la meule profilée (100) et / ou du premier outil abrasif, de telle sorte qu'une largeur axiale de la rainure du côté enveloppe diminue dans la zone d'extrémité, en direction de l'extrémité de la géométrie de taillant.

7. Procédé selon l'une quelconque des revendications 1 à 6, **caractérisé en ce que** la meule profilée (100) comprend dans la zone des surfaces de contact des particules de diamant dans un liant métallique.

8. Procédé selon l'une quelconque des revendications 1 à 7, **caractérisé en ce qu'**un angle de taillant entre la surface (12, 22, 32) d'enlèvement de copeaux et la surface libre (13, 23, 33) est de 110° à 60°.

9. Procédé selon l'une quelconque des revendications 1 à 8, **caractérisé en ce que** le premier outil abrasif et le deuxième outil abrasif sont conçus de telle sorte qu'une première rugosité de surface de la surface (12, 22, 32) d'enlèvement de copeaux soit différente d'une deuxième rugosité de surface d'une zone de la rainure du côté enveloppe qui se raccorde sur la surface (12, 22, 32) d'enlèvement de copeaux.

10. Procédé selon l'une quelconque des revendications 1 à 9, **caractérisé en ce que** pour l'usinage, l'on conduit le deuxième outil abrasif le long d'une torsion de la rainure meulée du côté enveloppe.

11. Outil à queue (1) en matériel plein, destiné à l'usinage de matériaux, comprenant une queue d'outil (2) avec au moins un rainure de coupe (11, 21, 31) hélicoïdale, meulée du côté enveloppe avec une surface (12, 22, 32) d'enlèvement de copeaux meulée dans la rainure de coupe (11, 21, 31), une arête de coupe (10, 20, 30) se raccordant sur la surface (12, 22, 32) d'enlèvement de copeaux et une surface libre (13, 23, 33) se raccordant sur l'arête de coupe (10, 20, 30), **caractérisé en ce que** l'outil à queue (1) en matériel plein est produit d'après un procédé selon l'une quelconque des revendications 1 à 10, de telle sorte que la surface (12, 22, 32) d'enlèvement de copeaux et la surface libre (13, 23, 33) soient rodées en simultané.

12. Outil à queue pour matériaux pleins selon la revendication 11, **caractérisé par** un talon (14, 24, 34) se raccordant sur la surface libre (13, 23, 33).

13. Outil à queue en matériel plein selon la revendication 11 ou 12, **caractérisé par** une sortie (72) dans une zone d'extrémité du côté queue de la rainure de coupe (11, 21, 31) du côté enveloppe, la surface (12, 22, 32) d'enlèvement de copeaux adjacente à l'arête de coupe (10, 20, 30) s'écoulant plus loin dans la direction d'une extrémité de la rainure de coupe (11, 21, 31) que la surface libre (13, 23, 33).

14. Outil à queue en matériel plein selon la revendication 13, **caractérisé en ce qu'**une largeur axiale de la rainure de coupe (11, 21, 31) diminue dans la zone d'extrémité du côté queue en direction de l'extrémité de la rainure de coupe (11, 21, 31).

15. Outil à queue en matériel plein selon l'une quelconque des revendications 11 à 14, **caractérisé en ce qu'**une première rugosité de surface de la surface (12, 22, 32) d'enlèvement de copeaux est différente d'une deuxième rugosité de surface d'une zone de la rainure de coupe (11, 21, 31) qui se raccorde sur la surface (12, 22, 32) d'enlèvement de copeaux.
